# FASCICULE DE BREVET EUROPEEN

(11) **EP 1 482 158 B1**
(45) Date de publication et mention de la délivrance du brevet: **14.01.2009**
(21) Numéro de dépôt: 04102264.1
(22) Date de dépôt: 24.05.2004
(51) Int. Cl.: F02K 1/00, F02K 1/12

(54) **Volet de tuyère à durée de vie augmentée pour turbomoteurs d'avion**
Bewegliche Düsenklappe eines Turbomotors mit verbesserter Lebensdauer
Movable exhaust nozzle flap of a turbomachine with extended durability

(30) Priorité: 26.05.2003 FR 0350177
(43) Date de publication de la demande: 01.12.2004
(73) Titulaire: SNECMA, 75015 Paris (FR)
(72) Inventeur: PANCOU, Thierry, 77000, MELUN (FR); BARRET, Hervé, 91130, RIS ORANGIS (FR); CORBIN, Claude, 77950, VOISENON (FR); BLANCHARD, Stéphane, 77210, SAMOREAU (FR)
(74) Mandataire: Poulin, Gérard

(56) Documents cités:
- US-A- 4 196 856
- US-A- 4 637 550
- US-A- 5 000 386
- US-A- 5 034 172

## Description

### DOMAINE TECHNIQUE

L'invention se rapporte aux volets de tuyère pour turbomoteurs d'avion et plus particulièrement à des volets en matériau composite réfractaire.

Les tuyères à section variable sont bien connues dans l'aéronautique pour canaliser le flux des gaz de propulsion en fonction du régime des turbomoteurs qui les produisent. Dans ce qui suit, les tuyères à section variable seront simplement appelées « tuyères ».

### ETAT DE LA TECHNIQUE ANTERIEURE

Le brevet US 5 285 637 présente clairement un modèle élaboré de tuyère comportant successivement de l'avant vers l'arrière un tronçon convergeant et un tronçon divergeant, cette tuyère étant également susceptible d'une poussée dite « vectorielle » obtenue par déviation du flux de gaz de propulsion. Il existe des tuyères plus simples qui sont limitées à un seul tronçon convergeant et/ou qui sont axisymétriques, c'est-à-dire qu'elles ne permettent pas de dévier le flux de gaz de propulsion. Dans tous les cas, une tuyère comporte une pluralité de volets jointifs pour former un canal à section variable autour des gaz de propulsion. Un volet a une structure générale de plaque rectangulaire mince et allongée et il est articulé à l'élément mécanique situé juste en amont de lui. Le volet peut dans certains cas particuliers être de forme trapézoïdale généralement isocèle, la forme rectangulaire en constituant la forme limite. Dans le cas d'une tuyère convergente et divergente, chaque volet du tronçon convergent est ainsi articulé en amont à la structure fixe mais également en aval au volet du tronçon divergent qui est dans son prolongement. La face dite « intérieure » du volet, c'est-à-dire tournée vers l'intérieur de la tuyère, est léchée directement en tout ou en partie par le flux de gaz chaud de propulsion désigné ci-après « flux chaud ». Au contraire, la face opposée dite « extérieure », c'est-à-dire tournée vers l'extérieur de la tuyère, est léchée en tout ou en partie par un flux de l'air froid désigné ci-après « flux froid ».

On distingue les volets dits « commandés » et les volets dits « d'étanchéité ». Les volets commandés sont reliés à des biellettes qui les rapprochent ou qui les éloignent de l'axe géométrique de la tuyère afin d'en faire varier la section. Les espaces de largeur variable entre les volets commandés sont occultés par les volets d'étanchéité qui sont situés entre les volets commandés et le flux de gaz de propulsion, ces volets d'étanchéité étant maintenus plaqués contre les volets commandés par des moyens mécaniques et par la pression des gaz de propulsion. On comprend que les volets commandés subissent de fortes sollicitations mécaniques. En exploitation, la surface des volets exposée au flux chaud est couramment portée à des températures de l'ordre de 1000°C. De ce fait, les volets de tuyère sont habituellement en alliage métallique réfractaire, c'est-à-dire résistant aux hautes températures. Malgré cela, leur durée de vie reste limitée.

Certaines solutions proposées, comme dans le document US 2 770 944, impliquent une construction à double paroi des volets de tuyère. Les inconvénients précédents demeurent pour l'essentiel ; la construction à double paroi est en général exploitée pour faire circuler de l'air de refroidissement à travers leur intervalle, mais des différences importantes de température demeurent dans le volet malgré le rafraîchissement obtenu.

On connaît des matériaux composites réfractaires constitués de fibres réfractaires noyées dans une matrice réfractaire. Les fibres et la matrice peuvent être du carbone. Les fibres et la matrice peuvent être également de la céramique telle le carbure de silicium SiC, les aluminures de titane, les aluminures d'aluminium, etc. Malgré leur résistance mécanique et leur résistance en température élevée, de tels matériaux se prêtent mal à la constitution de volets de tuyères car ils sont très vulnérables aux gradients thermiques générateurs de contraintes en traction du fait de leur rupture du type « vitreuse ». Par rupture « vitreuse », on entend que le matériau se rompt brutalement sous l'effet d'une contrainte en traction dès que cette contrainte dépasse la limite élastique du matériau. Cette vulnérabilité est aggravée avec les matériaux composites réfractaires qui ont un module d'élasticité ou module de Young élevé et se maintenant aux hautes températures.

On a tenté de réaliser des volets en matériau composite réfractaire se présentant sous la forme de plaques rectangulaires allongées planes et minces sur lesquels sont fixés des éléments de liaison en alliage métallique réfractaire. Avec de tels volets, la face froide tend à se fissurer sous l'effet des différences de température entre la face chaude et la face froide, la dilatation de la face chaude générant des contraintes de traction sur la face froide. Dans le cas des volets commandés, la température au centre du volet est plus élevée que vers ses bords latéraux car le centre du volet est directement exposé au flux chaud alors que les bords latéraux sont isolés du flux chaud par les volets d'étanchéité. De ce fait, la dilatation du volet au centre génère sur les bords des contraintes de traction qui provoquent des fissurations tendant à se propager vers le centre et à rompre le volet.

Il ressort que, comme les matériaux composites réfractaires sont vulnérables aux gradients thermiques et que ceux-ci sont inévitables dans les volets de tuyère, les tentatives de construire ces pièces en ces matériaux ne semblent pas avoir bien réussi. Le problème affronté par les inventeurs était donc de construire des volets de tuyère en matériaux composites réfractaires dont la durée de vie serait réellement accrue.

### EXPOSÉ DE L'INVENTION

Pour résoudre ce problème, l'invention propose un volet de tuyère remarquable en ce qu'il est constitué d'un corps tronconique creux et transversalement aplati suivant des génératrices géométriques rectilignes, le corps formant une paroi mince d'épaisseur sensiblement constante E, cette paroi étant divisée transversalement en quatre parties adjacentes soit : une paroi trapézoïdale et plane dite « chaude », une paroi trapézoïdale et plane dite « froide » parallèle à la paroi chaude et deux parois latérales symétriques reliant latéralement la paroi froide et la paroi chaude, la paroi comportant une surface intérieure continue avec un rayon de courbure au moins égal à 2xE, la paroi étant en matériau composite réfractaire constitué de fibres de renfort continues et croisées en matériau réfractaire noyées dans une matrice en matériau également réfractaire.

Des volets de tuyère à double paroi en matière composite ne semblent pas avoir été proposés dans l'art. Les raisons sont probablement à rechercher en raison de la constatation que les gradients de température y existent aussi et que les risques de rupture vitreuse ne sont point diminués ; et en la difficulté de façonner un tel volet de tuyère avec les techniques spécifiques aux matériaux composites.

Il est cependant apparu que la présence de parois latérales se raccordant aux bords de la paroi chaude par des bords arrondis changeait complètement la tenue du volet aux sollicitations d'origine thermique.

Une résistance satisfaisante à la rupture vitreuse est espérée avec les volets conforme à l'invention. De plus, la mauvaise conductivité thermique des matériaux composites réduit les transfert de chaleur vers la paroi froide, sans qu'un refroidissement par circulation d'air entre les parois soit nécessaire ni même probablement favorable puisqu'il pourrait accroître les différences de températures dans la paroi chaude d'une face à l'autre.

Dans un mode particulier de réalisation, ce volet comporte à une extrémité un élément d'articulaire dit « amont » solidaire d'un insert dit « amont » pénétrant dans la cavité du volet, l'insert étant tenu par des vis contre la paroi froide, la paroi froide étant prise localement en sandwich entre les têtes des vis et l'insert amont, les vis traversant la paroi froide et se vissant dans l'insert amont.

Dans un autre mode de réalisation n'excluant pas le premier, le volet comporte un élément d'articulation dit « aval » solidaire d'un insert dit « aval » et une chape de bielle appliquée contre la paroi froide à l'extérieur du volet, la chape de bielle étant située sur la partie médiane du volet, l'insert aval se prolongeant à l'intérieur du volet jusque sous la chape de bielle, l'insert aval étant fixé contre la paroi froide par au moins trois vis dont la tête est à l'extérieur du volet, les vis traversant la paroi froide et venant se visser dans l'insert aval, l'une des trois vis traversant également la chape de bielle et permettant de la maintenir contre la paroi froide.

L'isolation thermique offerte par le volet dépend aussi de son épaisseur, c'est-à-dire de la largeur des parois latérales. Il est avantageux que celles-ci ne comprennent pas seulement des portions arrondies mais aussi des portions planes pour offrir une barrière plus grande aux échauffements.

La résistance mécanique du volet doit parfois être renforcée. Le volet comprendra alors des nervures joignant les parois trapézoïdales et planes par des portions arrondies ayant un rayon de courbure au moins égal à 2xE. Ces nervures sont aussi en matière composite réfractaire et ne sont responsables que d'une faible fuite de chaleur vers la paroi froide.

Un aspect important de l'invention est le procédé de fabrication d'un tel volet de tuyère. Il comprend les étapes de création d'une texture à bords continus de fibres réfractaires entrecroisées, de mise en tension de la texture autour de profilés rigides et poreux, opposés et incurvés avec des convexités dirigées dans des directions divergentes et ayant des rayons de courbure au moins égaux à 2xE, E étant l'épaisseur de la texture, et de dépôt d'une matrice réfractaire par dépôt en phase de vapeur sur la texture et à travers les profilés.

Une variante de ce procédé, utilisée pour construire un volet nervuré dont nous avons parlé ci-dessus, comprend les étapes de création d'une pluralité de textures à bords continus de fibres réfractaires entrecroisées, de mise en tension des textures autour de paires de profilés rigides et poreux, opposés et incurvés avec des convexités dirigées dans des directions divergentes pour chacune des parois, les profilés ayant respectivement des rayons de courbure au moins égaux à 2xE, E étant l'épaisseur d'une des textures qui est tendue sur le profilé, et de dépôt d'une matrice réfractaire par dépôt en phase de vapeur sur les textures et à travers les profilés, les textures ayant des portions superposées et la matrice étant continue à travers lesdits portions superposées.

### BRÈVE DESCRIPTION DES DESSINS

L'invention sera mieux comprise et les avantages qu'elle procure apparaîtront plus clairement au vu d'exemples détaillés de réalisation et des figures annexées.
La figure 1 illustre un volet de type « commandé » équipé de ses éléments de liaison.
La figure 2 illustre le volet nu.
La figure 3 illustre un élément d'articulation amont du type pivotant avec son insert.
La figure 4 illustre un élément d'articulation aval également du type pivotant avec embout intégré.
Les figures 5 et 6 montrent le détail d'un élément d'articulation amont du type rotulant.
Les figures 7 et 8 montrent le détail de l'élément d'articulation amont du type pivotant.
Les figures 9 et 10 illustrent le détail de l'élément d'articulation aval sans l'embout intégré.
La figure 11 illustre un volet de tuyère complexe.
La figure 12 illustre un mode de fabrication d'un tel volet.
La figure 13 illustre une variante de réalisation.
La figure 14 illustre une ébauche d'un autre volet de tuyère complexe.
La figure 15 illustre une ébauche d'un autre volet de tuyère complexe.
Et le figure 16 illustre un embout servant pour un volet nervuré.

### EXPOSÉ DÉTAILLÉ DE MODES DE RÉALISATION PARTICULIERS

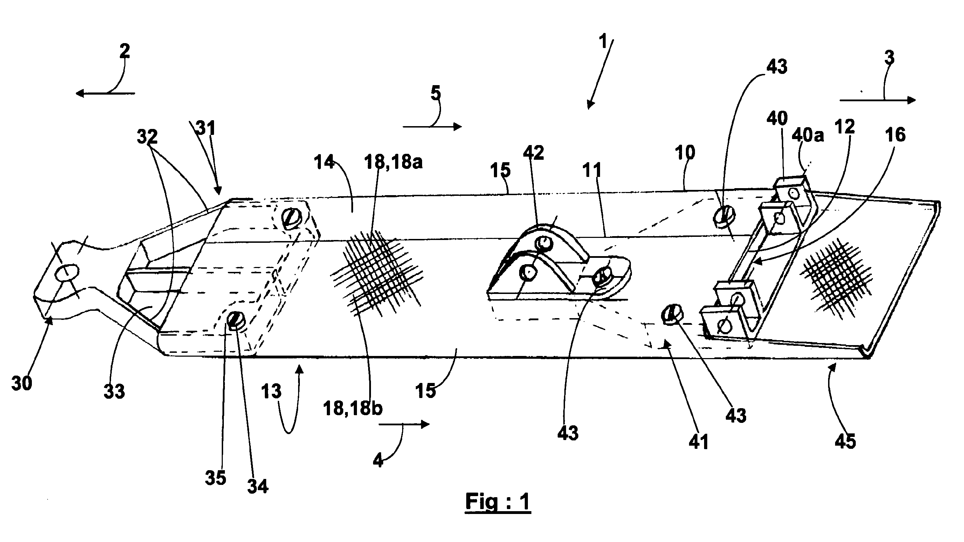

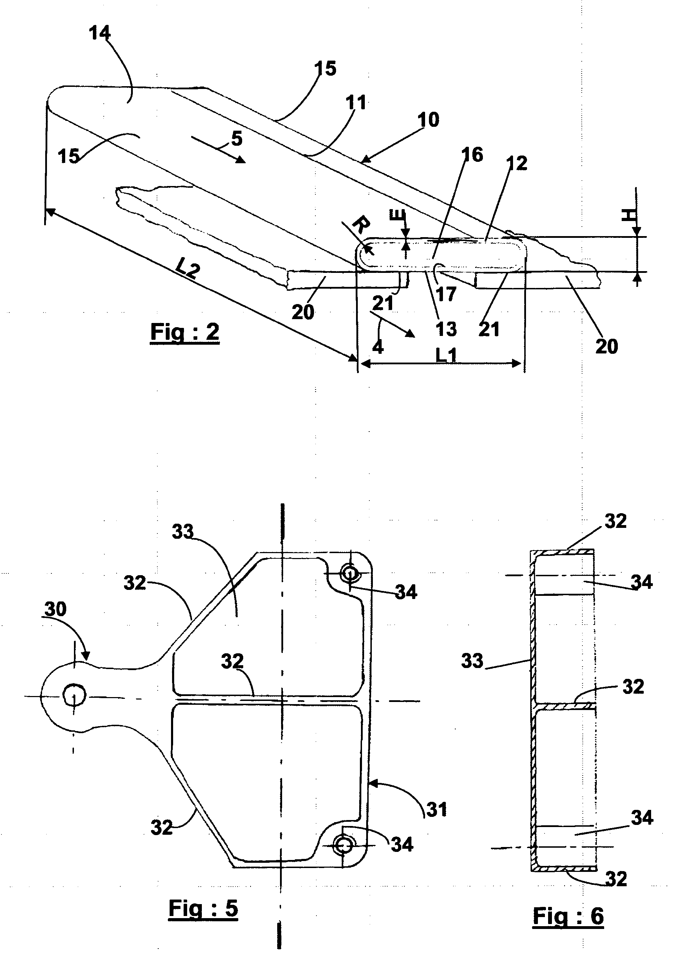

On se reportera en premier lieu simultanément aux figures 1 et 2. Le volet de tuyère 1 est léché de l'amont 2 vers l'aval 3 d'un côté par un flux de gaz de propulsion chaud 4 et de l'autre coté par un flux de gaz froid. Le volet 1 est constitué par un corps 10 cylindrique transversalement aplati dont une génératrice géométrique est illustrée en référence 11. Le corps 10 est constitué par une paroi 12 mince d'épaisseur E monobloc, c'est-à-dire en un seul tenant. La paroi 12 comporte quatre parties adjacentes deux à deux selon une génératrice 11. La première partie ou paroi chaude 13 est plane et rectangulaire. La seconde partie ou paroi froide 14 est plane, rectangulaire et opposée et parallèle à la paroi chaude 13. La troisième et la quatrième partie sont constituées par les parois latérales 15 et sont convexes, c'est-à-dire bombées vers l'extérieur. On référencera 16 la cavité intérieure formée par la paroi 12 et 17 la surface intérieure de cette paroi 12. La paroi 12 est en matériau composite réfractaire. A cet effet, ce matériau est constitué de fibres 18 réfractaires continues et croisées noyées dans une matrice également réfractaire. Avec un tel matériau, le rayon de courbure R de la surface intérieure 17 doit être au moins égal à deux fois l'épaisseur E de la paroi 12 afin d'éviter le délaminage sous contrainte des nappes de fibres 18, c'est-à-dire la séparation des différentes nappes par rupture de la matrice. En conséquence, la hauteur H du volet est au moins égale à six fois l'épaisseur E de la paroi. Une telle structure autorise des volets minces dont la largeur L1 est au moins égale à cinq fois la hauteur H.

Une partie des fibres 18a sont globalement parallèles entre elles. Dans cet exemple, les fibres 18 sont inclinées à 45° par rapport aux génératrices 11. Cette configuration est plus particulièrement utilisée pour un corps 12 court. Dans le cas d'un corps 12 long, on préférera disposer une partie des fibres 18a parallèlement aux génératrices 11 et l'autre partie des fibres 18b perpendiculairement aux génératrices 18b afin d'améliorer la résistance en flexion. Dans tous les cas, un nombre suffisant de nappes doivent comporter des fibres 18 entourant le corps 10 transversalement aux génératrices 11. En pratique, la moitié des fibres 18a croise l'autre moitié des fibres 18b à 90°. La fabrication du corps 10 est faite par les techniques bien connues de l'homme du métier. La mise en place des fibres peut se faire par bobinage croisé des fibres sur un mandrin ou par application d'un tissu de fibres peu serrées. Le tissu de fibres peut être un drap classique. Pour améliorer la résistance du volet, on peut avantageusement utiliser un tissu multicouche, par exemple un tissu dit « 2,5D » divulgué par le brevet américain US 5 899 241 à priorité du brevet français FR 2.759.096.

On se reportera plus particulièrement à la figure 2. En exploitation, la paroi chaude 13 est léchée au moins en partie par le flux chaud 4 de gaz de propulsion alors que la paroi froide 14 opposée à la paroi chaude 13 est léchée par un flux froid 5. La paroi chaude 13 se dilate donc par rapport à la paroi froide 14, mais l'effort de traction qui est ainsi transmis à la paroi froide 14 transversalement aux génératrices 11 est atténué par la déformation des parois latérales 15 qui reprend donc une partie de cet effort.

Dans cet exemple, on a représenté deux volets d'étanchéité 20 qui arrivent au contact de la paroi chaude 13 dans le voisinage des parois latérales 15. Ainsi, les zones de contact 21 de la paroi chaude 13 avec les volets d'étanchéité 20 ainsi que les parois latérales 15 ne sont pas léchées par le flux chaud 4 et sont donc ainsi plus froides. Toutefois, au contraire d'une simple plaque, les contraintes de traction dans le sens des génératrices 11 imposées à la paroi chaude dans les zones de contact 21 sont réduites par la présence des parois latérales 15 qui s'opposent à cette dilatation et reprennent donc une partie de l'effort de traction produit. En d'autres termes, les contraintes de traction se répartissent dans les zones de contact 21 et dans les parois latérales 15, ce qui en réduit la valeur maximale.

Un tel volet permet donc de réduire sensiblement les contraintes de traction provoquées par les gradients thermiques, ce qui autorise l'utilisation de matériaux composites réfractaires à rupture vitreuse tels que ceux précités, ce qui résout le problème posé.

Le volet objet de l'invention présente l'avantage d'être plus léger que son équivalent se présentant sous la forme d'une plaque en matériau composite réfractaire. En effet, un volet constitué d'une plaque pleine de 7mm peut être remplacé par un volet selon l'invention dont la paroi ne fait que 2mm d'épaisseur, ceci pour une résistance en flexion dix fois supérieure, l'épaisseur cumulée de la paroi chaude 14 et de la paroi froide 15 étant donc de 2mm+2mm=4mm.

Le volet objet de l'invention présente aussi l'avantage de permettre la réduction de la signature infrarouge de la tuyère de deux manières. En effet, la paroi froide 14 est mieux isolée thermiquement de la paroi chaude 13 du fait de la structure creuse du volet.

On se reportera de nouveau à la figure 1. Le volet 1 est équipé vers l'amont 2 d'un élément d'articulation amont 30 du type rotulant solidaire d'un insert amont 31 constitué de trois nervures 32 plus hautes que larges, d'une paroi 33 reliant transversalement les nervures 32 entre elles et assurant une rigidité latérale, et de deux bossages 34. Par élément d'articulation, on entend la partie de l'articulation qui reste solidaire du volet lorsque l'articulation est désassemblée. L'élément d'articulation amont 30, l'insert amont 31 et ses constituants ainsi définis constituent un ensemble monobloc, c'est-à-dire d'un seul tenant. L'insert amont 31 est déposé dans la cavité intérieure 16 en amont 2 du volet 1. L'insert amont 31 est disposé dans la cavité intérieure 16 en amont 2 du volet 1. L'insert amont 31 est tenu contre la paroi froide 14 par deux vis 35 dont la tête est à l'extérieur du volet 1, ces vis 35 traversant la paroi froide 14 et venant se visser dans les bossages 34. En d'autres termes, la paroi froide 14 est prise localement en sandwich entre les têtes des vis 35 et l'insert. Les vis 35 sont avantageusement écartées de façon à ce qu'elles soient chacune positionnées au voisinage d'une paroi latérale 15 afin de ne pas imposer à la paroi froide des contraintes de flexion transversalement aux génératrices 11, les efforts étant repris par l'angle formé par la paroi froide 14 au voisinage de la paroi latérale 15 à cet endroit et par cette paroi latérale 15.

Le volet 1 est également équipé d'un élément d'articulation aval 40 du type pivotant relié à un insert aval 41 et formant avec lui un ensemble monobloc. L'élément d'articulation aval 40 est déporté à l'extérieur du volet du côté de la paroi froide 14. L'élément d'articulation aval 40 permet un pivotement selon un axe géométrique 40a perpendiculaire aux génératrices 11, parallèle à la paroi froide 14 et sensiblement dans l'alignement de cette paroi froide 14. Le volet 1 est également équipé d'une chape de bielle 42 appliquée contre la paroi froide 14 à l'extérieur du volet 1, la chape de bielle 42 étant située sur la partie médiane du volet 1 à égale distance des parois latérales 15.

L'insert aval 41 se prolonge à l'intérieur du volet 1 jusque sous la chape de bielle 42. L'insert aval 41 est fixé contre la paroi froide 14 par trois vis 43 dont la tête est à l'extérieur du volet 1, les vis traversant la paroi froide 14 et venant se visser chacune dans un bossage 44 de l'insert aval 41. Deux des trois vis 43 sont proches de l'élément d'articulation aval 40 et écartées pour être positionnées également chacune au voisinage d'une paroi latérale, ceci pour les raisons déjà énoncées dans le cas des vis 35 fixant l'insert amont 31. La troisième vis 43 traverse également la chape de bielle 42 et permet de la maintenir contre la paroi froide 14. On comprend que la chape de bielle 42 permet en exploitation de manoeuvrer le volet 1 par l'intermédiaire d'une bielle non représentée.

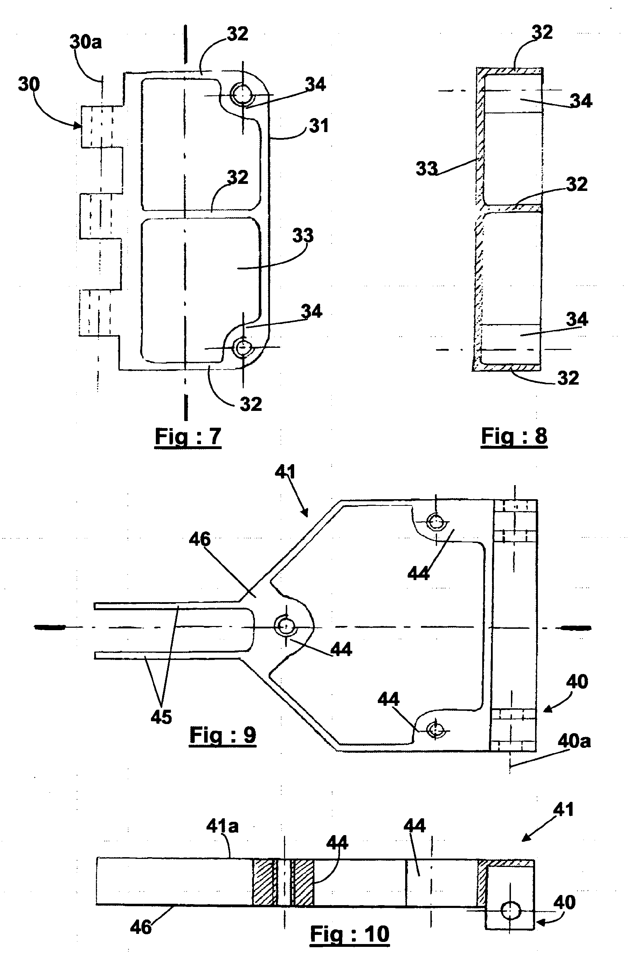

L'insert aval 41 est également prolongé vers l'amont 2 par une fourche 45 dont les branches passent sous la chape de bielle 42 afin d'empêcher la paroi froide 14 de fléchir sous l'effort transmis par la chape de bielle 42 à la paroi froide 14, la fourche 45 reprenant ainsi cet effort. La surface de l'insert aval 41 référencée 46 sur la figure 9 est au contact de la paroi froide 14 et de forme complémentaire, donc plane en pratique.

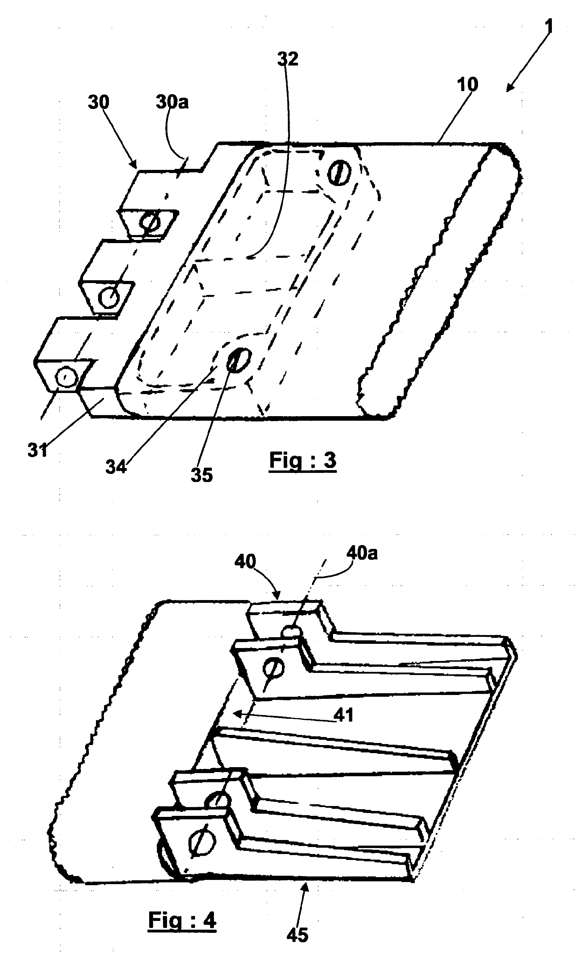

Dans cet exemple également, le volet 1 est prolongé vers l'aval 3 par un embout 45 qui est un prolongement de la paroi 12 et plus précisément de la paroi chaude 13 et des parois latérales 15, ce prolongement se faisant toujours selon la génératrices 11. En exploitation, l'embout aval 45 permet de canaliser le flux chaud 4 plus loin vers l'aval 3 et de protéger ainsi l'élément d'articulation aval 40 puisque l'embout aval 45 passe entre l'élément d'articulation aval 40 et le flux chaud 4. La présente invention présente l'avantage en exploitation d'isoler complètement les vis de fixation 35, 43 du flux chaud 4 puisque la paroi chaude 13 passe entre les vis et le flux chaud, ces vis restant nécessairement métalliques. On se reportera à la figure 3 pour voir un exemple d'élément d'articulation amont 30 qui est cette fois de type pivotant selon un axe géométrique 30a perpendiculaire aux génératrices 11, parallèle aux parois chaude et froide 13, 14 et à mi-distances des génératrices 11 définissant les parois chaude et froide 13, 14. Cette figure montre également l'insert amont 31 introduit dans le volet 1 et fixé contre la paroi froide 14 par les deux vis 35.

On se reportera à la figure 4 pour voir un exemple d'embout aval 45 constitué ici par le prolongement vers l'aval 3 de l'insert aval 41. L'embout aval 45 est rigidifié par des nervures 50 planes et perpendiculaires à l'axe géométrique de pivotement 40a, la partie amont de ces nervures 50 étant percées selon l'axe géométrique de pivotement 40a et constituant ainsi l'élément d'articulation aval 40.

On se reportera aux figures 5 et 6 pour voir plus précisément la constitution de l'élément d'articulation 30 de type rotulant et l'insert amont 31. On se reportera aux figures 7 et 8 pour voir ces mêmes constituants dans le cas d'un élément d'articulation 30 de type pivotant selon l'axe géométrique 30a.

On se reportera enfin aux figures 9 et 10 pour voir plus précisément l'insert aval 41 et l'élément d'articulation aval 40. Dans certaines utilisations, le volet 1 peut avoir plus généralement une forme tronconique aplatie, la paroi chaude 13 et la paroi froide 14 étant alors trapézoïdales, de préférence mais non obligatoirement isocèle, les parois latérales 15 n'étant plus alors parallèles. Les inserts amont et aval 31, 41 peuvent être percés afin de laisser passer un flux d'air froid à l'intérieur du volet.

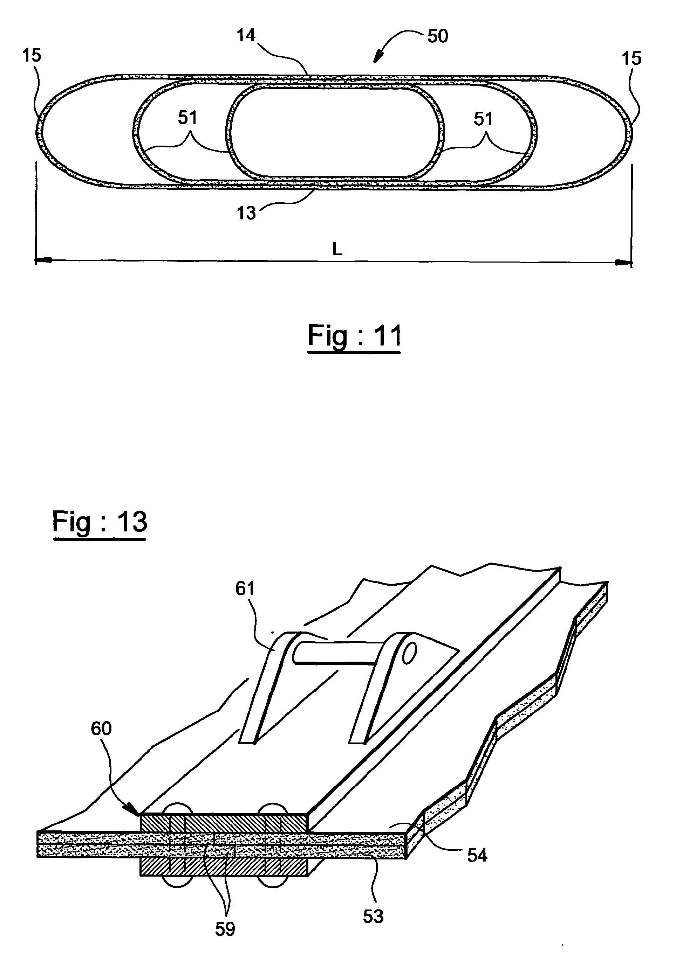

Le volet 1 tel qu'il a été décrit jusqu'ici présente cependant certains inconvénients liés à la grande extension latérale de la paroi froide 14 et surtout de la paroi chaude 13. La pression des gaz à laquelle cette dernière est soumise peut produire à la fois des déformations qui accroissent les contraintes de flexion et de cisaillement interlaminaire aux bords arrondis de la paroi chaude 13, ainsi que des vibrations. Le volet de tuyère illustré à la figure 11 permet de lutter contre ces inconvénients. Il porte la référence 50 et se distingue du précédent par la présence de nervures 51 joignant la paroi froide 14 à la paroi chaude 13 entre les parois latérales 15. Les nervures 51 sont ici au nombre de quatre. Leur direction d'allongement est essentiellement la même que celle des parois latérales 15. Elles sont aussi construites comme les parois latérales 15, avec des bords arrondis 52 ayant un rayon de courbure intérieur au moins deux fois supérieur à l'épaisseur. Ici encore des contraintes intolérables sont évitées aux jonctions à la paroi chaude 13.

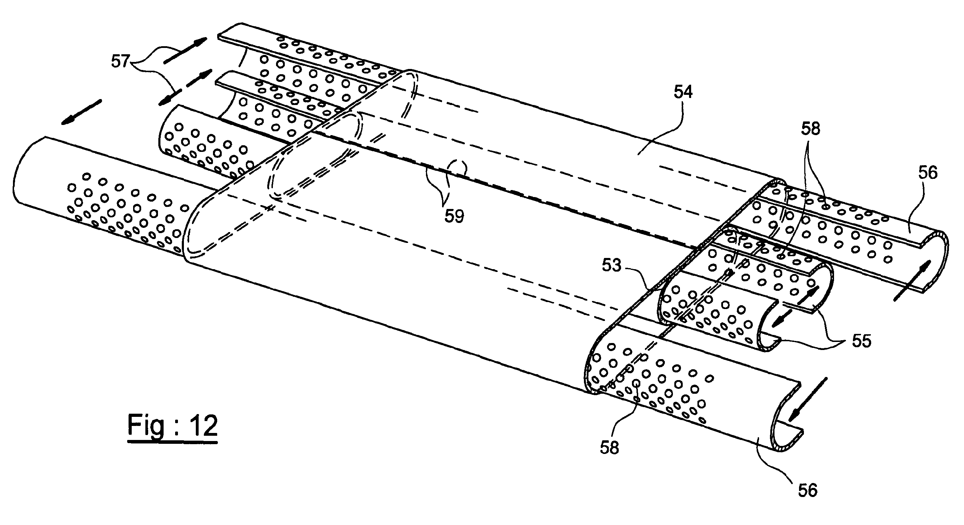

Le mode de fabrication d'un tel volet de tuyère est détaillé au moyen de la figure 12 pour un volet ne présentant qu'une paire de nervures 51 ; cette configuration plus simple a été choisie pour ne pas compliquer excessivement le dessin, mais il sera évident d'appliquer le procédé à la réalisation de la figure 11 ou à d'autres réalisations décrites ensuite.

Les parois du volet 50 sont d'abord matérialisées par des textures composées de l'entrecroisement des fibres réfractaires. Ces textures sont ici au nombre de deux, l'une 53 étant disposée dans l'autre 54. De plus, une paire de profilés tendeurs est associée à chacune des textures 53 et 54 pour les tendre de façon à former des étendues planes entre les profilés, qui donneront naissance aux parois chaude et froide. Les profilés tendeurs de la texture 53 ont la référence 55, ceux de la texture 54 la référence 56. Les profilés 55 et 56 de chaque paire se font face et ont des sections incurvées à la convexité dirigée vers l'extérieur, afin que les textures 53, 54 prennent la forme, arrondie au moins à leurs bords, des parois latérales 15 et des nervures 51. L'écartement les parois de profilés 55 et 56 est maintenu par des entretoises 57 d'une nature quelconque. Enfin, les profilés 55 et 56 sont ajourés ou poreux, les pores portant les références 58. Les paires de profilés 55 et 56 sont disposés symétriquement à un plan commun.

Les textures 53 et 54 prennent donc une forme de manchon aplati. Elles se touchent par leurs faces planes entre les profilés tendeurs 55 et 56. Il est à noter qu'elles sont formées en pratique de feuilles de fibres qu'on a repliées et jointes par des bords opposés. Les lignes de joint 59 ainsi obtenues peuvent être cousues ou agrafées. Elles peuvent aussi être pressées entre des éléments opposés d'une ferrure métallique 60 portant avantageusement une chape 61 de bielle de commande. Cela est représenté à la figure 13. Enfin, les lignes de joint 59 peuvent être voisines ou opposées. Une meilleure cohésion pourra être obtenue en cousant ou agrafant ensemble les textures 53 et 54 où elles se joignent touchent, sans que cela soit nécessaire. Dans toutes les variantes, le matériau composite est créé en déposant la matière de matrice sur les textures 53 et 54 par un dépôt en phase de vapeur. La matière de la matrice pénètre peu à peu dans le réseau des fibres des textures 53 et 54 en passant aussi par les pores 58, qui ne permettent donc pas aux profilés tendeurs 55 et 56 d'affaiblir les parois latérales 15 et les nervures 51 en arrêtant la matière de dépôt. Après cette étape de densification, un durcissement du composite peut être réalisé par chauffage au four. Le même procédé est appliqué à la fabrication des volets sans nervures, une seule texture et une seule paroi de profilés tendeurs étant employés.

Les profilés tendeurs 55 et 56 définissent donc la forme des parois latérales 15 et des nervures 51, y compris aux bords arrondis. La superposition des textures sur une partie de l'étendue de leurs portions planes donne une épaisseur plus forte des parois chaude et froide 13 et 14 au centre. Cette épaisseur plus grande renforce le volet 50 contre la flexion autour du sens tangentiel. Elle a pour inconvénient un dépôt plus difficile de la matière de la matrice au coeur de l'empilement des textures, mais qu'on peut obtenir par une migration progressive réalisée par plusieurs étapes de densification.

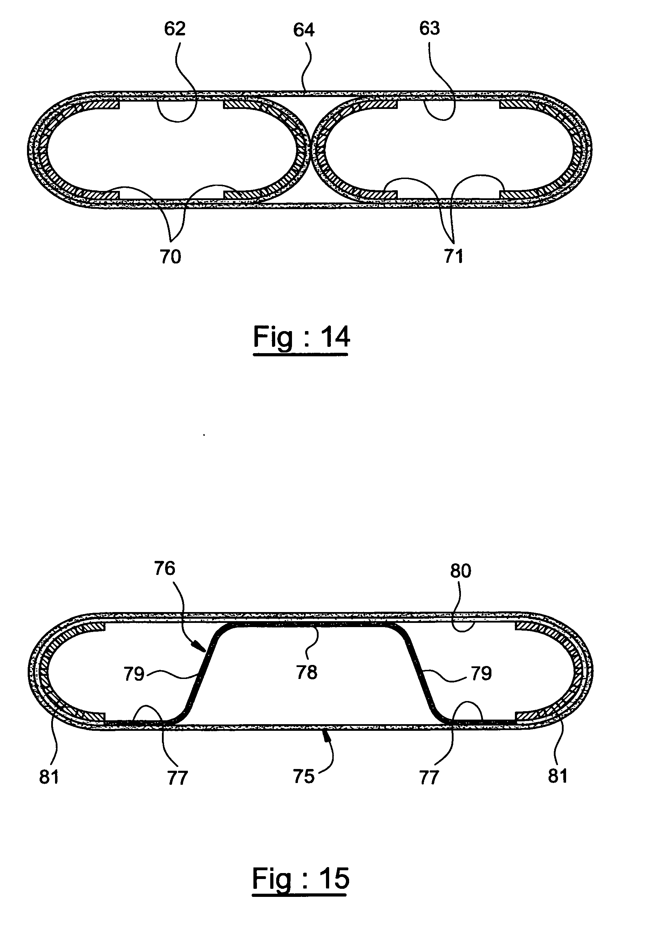

Une autre configuration encore est décrite au moyen de la figure 14. Deux paires de profilés tendeurs 70 et 71 sont utilisées pour trois textures 62, 63 et 64 dont la dernière entoure les deux autres, qui sont côte à côte. Les profilés 70 étendent la texture 62, et les profilés 71 la texture 63. De plus, les profilés 70 et 71 extrêmes de l'alignement tendent aussi la texture 64, et les deux profilés 60 et 61 intermédiaires, dirigés l'un vers l'autre, font se toucher les extrémités intérieures des textures 62 et 63. Le même procédé de fabrication donnera un volet de tuyère ayant une nervure centrale particulièrement forte puisqu'elle joindra les parois chaude et froide par des paires de bords arrondis.

Un autre genre de réalisation apparaît à la figure 15 : le volet de tuyère sera formé essentiellement à partir d'une première texture 75, de forme analogue à la texture 54 par exemple, et d'une texture interne 76 ondulée et présentant deux ailes 77 sur les côtés de la paroi chaude 13, une bande 78 sous le centre de la paroi froide 14, et deux nervures obliques 79 joingnant la bande 78 aux ailes 77. La texture interne 76 peut être tendue et densifiée partiellement séparément pour la rendre rigide avant que la première texture 75 ne soit enfilée autour d'elle.

Une troisième texture 80, longeant les parois latérales 15 et la paroi froide 14 d'une aile 77 à l'autre, peut compléter la structure du volet et renforcer la paroi froide 14. Elle peut être cousue ou non à la texture interne 76. La densification des textures 75, 76 et 80 pour former le volet de tuyère est alors entreprise comme pour les autres réalisation, avec une paire de profilés tendeurs 81 aux extrémités, qui sont semblables aux profilés tendeurs 56.

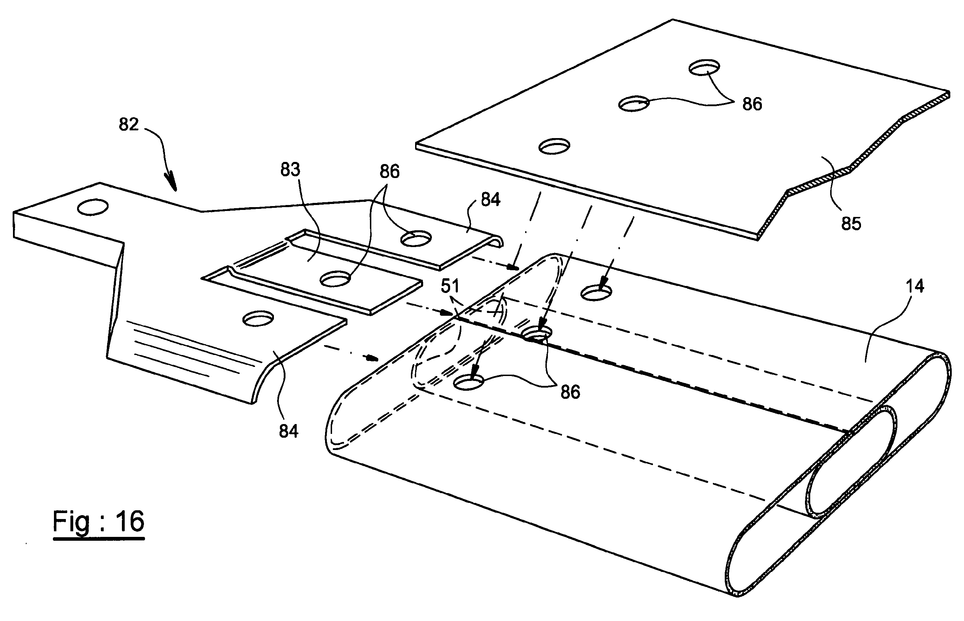

La figure 16 illustre un mode de finition d'un volet de tuyère nervuré, celui de la figure 12 par exemple, où on procède à la finition des pièces de liaison mécaniques. L'insert amont 82 engagé dans le volet proprement dit est en forme de fourchette et comprend une dent centrale 83 engagée entre les deux nervures 51 et deux dents latérales 84 engagées entre les nervures 51 et les parois latérales 15, et entre celles-ci. Il est complété par une plaque 85 qui enserre la paroi froide 14 entre elle et les dents 83 et 84. Tous ces éléments sont pourvus de perçages 86 de passage de vis de serrage non représentées, qui assurent le serrage.

Les volets de tuyère peuvent comprendre des rayons de courbure plus ou moins importants dans la limite indiquée ici. Des petits rayons de courbure sont en général préférés.

Pour une paroi chaude 13 ayant une partie plane de longueur déterminée, les volets d'étanchéité 20 couvrent une largeur plus petite de la paroi chaude 13 si les parois latérales 15 ont de petits arrondis de raccordement, et les gradients thermiques de la paroi chaude 13 sont réduits ; et les volets de tuyère peuvent s'approcher plus les uns des autres à l'état de fermeture de la tuyère puisqu'il sont moins larges : une plus grande fermeture devient possible.

Une distance suffisante doit cependant être maintenue entre les parois chaude et froide 13 et 14 pour limiter les transferts thermiques, de sorte que les parois latérales 15 auront en général une position plane d'une certaine largeur si les arrondis ont de petits rayons de courbure. Toutes les réalisations précédentes peuvent ainsi être construites à exemple des volets de la figure 1 (petits rayons de courbure) ou de la figure 11 (grand rayon de courbure).

Un agencement particulier des volets de tuyère comprend des pièces métalliques attachées à la paroi froide 14 et construites en titane. Ce métal est apprécié pour sa légèreté dans l'aéronautique et ailleurs, mais il résiste mal aux échauffement. Il est cependant possible d'obtenir des différences de température de 400°C entre les parois chaude et froide 13 et 14 (à 1000°C et 600°C par exemple) avec l'invention, ce qui justifie son emploi pour la ferrure 60, la chape 61, etc.

## Revendications

1. Volet de tuyère pour turbomoteur d'avion, **caractérisé en ce qu'**il est constitué d'un corps (10) tronconique creux et transversalement aplati suivant des génératrices géométriques (11) rectilignes, le corps (10) comprend une paroi (12) mince d'épaisseur sensiblement constante E, cette paroi (12) étant divisée transversalement en quatre parties adjacentes soif :
- une paroi (13) trapézoïdale et plane dite « chaude »,
- une paroi (14) trapézoïdale et plane dite « froide » parallèle à la paroi chaude (13) et deux parois latérales (15) symétriques reliant latéralement la paroi froide (13) et la paroi (14),
- la paroi (12) comportant une surface intérieure (17) continue avec un rayon de courbure au moins égal à 2xE, la paroi (12) étant en matériau composite réfractaire constitué de fibres de renfort (18) continues et croisées en matériau réfractaire, les fibres de renfort (18) étant noyées dans une matrice en matériau également réfractaire.

2. Volet selon la revendication 1, **caractérisé en ce qu'**il comporte à une extrémité un élément d'articulation (30) dit « amont » solidaire d'un insert (31) dit « amont » pénétrant dans la cavité 16 du volet 1, l'insert (31) étant tenu par des vis (35) contre la paroi froide (14), la paroi froide (14) étant prise localement en sandwich entre les têtes des vis (35) et l'insert amont (31), les vis (35) traversant la paroi froide (14) et se vissant dans l'insert amont (31).

3. Volet selon la revendication 1, **caractérisé en ce qu'**il comporte un élément d'articulation (40) dit « aval » solidaire d'un insert 41 dit « aval » et une chape de bielle (42) appliquée contre la paroi froide (14) à l'extérieur du volet (1), la chape de bielle (42) étant située sur la partie médiane du volet (1), l'insert aval (41) se prolongeant à l'intérieur du volet (1) jusque sous la partie médiane du volet (1) jusque sous la chape de bielle (42), l'insert aval (41) étant fixé contre la paroi froide (14) par au moins trois vis (43) dont la tête est à l'extérieur du volet (1), les vis (43) traversant la paroi froide (14) et venant se visser dans l'insert aval (41), l'une des trois vis (43) traversant également la chape de bielle (42) et permet de la maintenir contre la paroi froide (14).

4. Volet selon l'une quelconque des revendications 1 à 3, **caractérisé en ce que** les parois latérales (15) comprennent des portions planes reliées aux parois trapézoïdales et planes (13, 14) par des portions arrondies ayant le rayon de courbure au moins égal à 2xE à la surface intérieure (17).

5. Volet selon l'une quelconque des revendications 1 à 4, **caractérisé en ce qu'**il comprend des nervures joignant les parois trapézoïdales et planes (13, 14), essentiellement parallèles aux parois latérales et se raccordant aux parois trapézoïdales et planes par des portions arrondies ayant un rayon de courbure au moins égal à 2xE à une surface intérieure.

6. Volet selon la revendication 5, **caractérisé en ce que** les parois trapézoïdales et planes ont des épaisseurs croissant des parois latérales à une bande centrale.

7. Procédé de fabrication d'un volet de tuyère comprenant les étapes de création d'une texture à bords continus de fibres réfractaires entrecroisées, de mise en tension de la texture autour de profilés rigides et poreux, opposés et incurvés avec des convexités dirigées dans des directions divergentes et ayant des rayons de courbure au moins égaux à 2xE à une surface intérieure, E étant l'épaisseur de la texture, et de dépôt d'une matrice réfractaire par dépôt en phase de vapeur sur la texture et à travers les profilés.

8. Procédé de fabrication d'un volet de tuyère comprenant les étapes de création d'une pluralité de textures (53, 54, 62, 63, 64) à bords continus de fibres réfractaires entrecroisées, de mise en tension des textures autour de paires de profilés rigides et poreux (55, 56, 70, 71), opposés et incurvés avec des convexités dirigées dans des directions divergentes pour chacune des paires, les profilés ayant des rayons de courbures au moins égaux à 2xE, E étant l'épaisseur d'une des textures qui est tendue sur les profilés, et de dépôt d'une matrice réfractaire par dépôt en phase de vapeur sur les textures et à travers les profilés, les textures ayant des portions superposées et la matrice étant continue à travers lesdits portions superposées.

9. Procédé de fabrication selon la revendication 8, **caractérisé en ce que** les paires de profilés sont disposées symétriquement à un plan commun, et les portions superposées de textures sont planes et situées entre les paires de profilés.

10. Procédé de fabrication selon l'une quelconque des revendications 8 ou 9, **caractérisé en ce qu'**il comprend une étape de liaison de textures entre elles aux portions superposées avant le dépôt en phase de vapeur.

11. Procédé de fabrication selon l'une quelconque des revendications 7 à 10, **caractérisé en ce que** la texture ou les textures sont rendues continues par pliage d'une feuille de fibres entrecroisées, raccordement de deux bords opposés de la feuille et liaison desdits deux bords par une pièce de liaison (60).

## Claims

1. Nozzle flap for aircraft turbojet, **characterised in that** it is composed of a hollow tapered body (10) flattened in the transverse direction along straight geometric generating lines (11), the body (10) forming a thin wall (12) with an approximately constant thickness E, this wall (12) being divided transversely into four adjacent parts namely:
- a plane "hot" trapezoidal wall (13);
- a flat "cold" trapezoidal wall (14) parallel to the hot wall (13) and two symmetric side walls (15) connecting the cold wall (13) and the hot wall (14) laterally;
- the wall (12) comprising a continuous inner surface (17) with a radius of curvature equal to at least 2xE, the wall (12) being made of a refractory composite material composed of continuous reinforcing fibres (18) made crosswise from a refractory material, the reinforcing fibres (18) being embedded in a matrix made of another refractory material.

2. Flap according to claim 1, **characterised in that** it comprises an articulation element (30) called the "upstream" element at one end fixed to an insert (31) called the "upstream" insert penetrating into the cavity (16) in the flap 1, the insert (31) being held in place by screws (35) in contact with the cold wall (14), the cold wall (14) being locally sandwiched between the screw heads (35) and the upstream side insert (31), the screws (35) passing through the cold wall (14) and screwing into the upstream insert (31).

3. Flap according to claim 1, **characterised in that** it includes an articulation element (40) called the "downstream" element fixed to a "downstream" insert (41) and a connecting rod clevis (42) forced into contact with the cold wall (14) on the outside of the flap (1), the connecting rod clevis (42) being located on the median part of the flap (1), the downstream insert (41) being extended on the inside of the flap (1) as far as underneath the median part of the flap (1) as far as underneath the connecting rod clevis (42), the downstream insert (41) being fixed in contact with the cold wall (14) by at least three screws (43), the head of which is on the external surface of the flap (1), the screws (43) passing through the cold wall (14) and screwing into the downstream insert (41), one of the three screws (43) also passing through the connecting rod clevis (42) and holding it in place in contact with the cold wall (14).

4. Flap according to any one of claims 1 to 3, **characterised in that** the side walls (15) include flat portions connected to trapezoidal and flat walls (13, 14) through rounded portions with a radius of curvature equal to at least 2xE on the inner surface (17).

5. Flap according to any one of claims 1 to 4, **characterised in that** it includes ribs joining trapezoidal and plane walls (13, 14) essentially parallel to the side walls and connected to trapezoidal and plane walls through rounded portions with a radius of curvature equal to at least 2xE on an inner surface (17).

6. Flap according to claim 5, **characterised in that** the thickness of the trapezoidal and plane walls increases from the side walls towards a central strip.

7. Method for manufacturing a nozzle flap, including a step for creating a texture with continuous edges of refractory fibres arranged crosswise, a step for tensioning the texture around rigid and porous sections, opposite each other and curved inwards with convex parts facing towards divergent directions and with radii of curvature equal to at least 2xE, where E is the thickness of the texture, and a step for depositing a refractory matrix by vapour phase deposition on the texture and through the sections.

8. Method for manufacturing a nozzle flap including a step to create a plurality of textures (53, 54, 62, 63, 64) with continuous edges of refractory fibres arranged crosswise, a step to tension the textures around pairs of rigid and porous sections (55, 56, 70, 71), opposite each other and curved inwards with convex parts facing towards divergent directions for each pair, the sections having radii of curvature equal to at least 2xE, where E is the thickness of one of the textures that is tensioned on the sections, and a step for the deposition of a refractory matrix by vapour phase deposition on the textures and through the sections, the textures having superposed portions and the matrix being continuous through the said superposed portions.

9. Manufacturing method according to claim 8, **characterised in that** the pairs of sections are arranged symmetrically to a common plane, and the superposed sections of textures are flat and located between pairs of sections.

10. Manufacturing method according to either of claims 8 or 9, **characterised in that** it includes a step for binding textures to each other and to the superposed portions before the vapour phase deposition.

11. Manufacturing method according to any one of claims 7 to 10, **characterised in that** the texture or textures are made continuous by folding a sheet of crosswise fibres, joining the two opposite edges of the sheet and fixing the said two edges together by a connection fitting (60).

## Patentansprüche

1. Düsenklappe für Flugzeug-Turbomotoren,
**dadurch gekennzeichnet,**
**dass** sie von einem hohlen, kegelstumpfförmigen Körper (10) gebildet ist, der in Querrichtung abgeflacht ist, und zwar mit geradlinigen geometrischen Mantellinien (11), wobei der Körper (10) eine dünne Wand (12) mit einer im Wesentlichen gleich bleibenden Dicke E aufweist, wobei diese Wand (12) quer in vier aneinandergrenzende Teile unterteilt ist, und zwar:
- eine trapezförmige und ebene, so genannte "heiße" Wand (13),
- eine trapezförmige und ebene, so genannte "kalte" Wand (14), die parallel zur heißen Wand (13) verläuft, und
- zwei symmetrische Seitenwände (15), die die Wand (13) und die Wand (14) seitlich miteinander verbinden,
wobei die Wand (12) eine kontinuierliche Innenfläche (17) mit einem Krümmungsradius von mindestens gleich 2xE aufweist, wobei die Wand (12) aus hitzebeständigem Verbundstoff besteht, der von kontinuierlichen und kreuzweise angeordneten Verstärkungsfasern (18) aus hitzebeständigem Werkstoff gebildet wird,
wobei die Verstärkungsfasern (18) in einer Matrize aus ebenfalls hitzebeständigem Werkstoff eingebettet sind.

2. Düsenklappe nach Anspruch 1,
**dadurch gekennzeichnet,**
**dass** sie an einem Ende ein so genanntes "vorderes" Gelenkelement (30) enthält, das mit einem so genannten "vorderen" Einsatz (31) fest verbunden ist, der in den Hohlraum (16) der Klappe (1) eindringt, wobei der Einsatz (31) durch Schrauben (35) an der kalten Wand (14) festgehalten wird, wobei die kalte Wand (14) örtlich begrenzt zwischen den Köpfen der Schrauben (35) und dem vorderen Einsatz (31) in Sandwich-Anordnung genommen wird, wobei die Schrauben (35) durch die kalte Wand (14) hindurch verlaufen und in dem vorderen Einsatz (31) verschraubt sind.

3. Düsenklappe nach Anspruch 1,
**dadurch gekennzeichnet,**
**dass** sie ein so genanntes "hinteres" Gelenkelement (40) enthält, das mit einem so genannten "hinteren" Einsatz (41) fest verbunden ist, sowie ein Pleuel-Gabelgelenlc (42), das an der kalten Wand (14) an der Außenseite der Klappe (1) angebracht ist,
wobei das Pleuel-Gabelgelenk (42) sich im mittleren Bereich der Klappe (1) befindet,
wobei sich der hintere Einsatz (41) im Inneren der Klappe (1) bis unter das Pleuel-Gabelgelenk (42) fortsetzt, wobei der hintere Einsatz (41) an der kalten Wand (14) durch mindestens drei Schrauben (43) befestigt ist, deren Kopf sich außerhalb der Klappe (1) befindet, wobei die Schrauben (43) durch die kalte Wand (14) hindurch verlaufen und in dem hinteren Einsatz (41) verschraubt sind, wobei eine der drei Schrauben (43) auch durch das Pleuel-Gabelgelenk (42) hindurch verläuft und es ermöglicht, dieses an der kalten Wand (14) festzuhalten.

4. Düsenkappe nach einem der Ansprüche 1 bis 3,
**dadurch gekennzeichnet,**
**dass** die Seitenwände (15) ebene Abschnitte aufweisen, die mit den trapezförmigen und ebenen Wänden (13, 14) über abgerundete Abschnitte mit einem Krümmungsradius an der Innenfläche (17) von mindestens gleich 2xE verbunden sind.

5. Düsenklappe nach einem der Ansprüche 1 bis 4,
**dadurch gekennzeichnet,**
**dass** sie Rippen enthält, die an die trapezförmigen und ebenen Wände (13, 14) angefügt sind, im Wesentlichen parallel zu den Seitenwänden liegen und sich an die trapezförmigen und ebenen Wände über abgerundete Abschnitte mit einem Krümmungsradius an einer Innenfläche von mindestens gleich 2xE anschließen.

6. Düsenkappe nach Anspruch 5,
**dadurch gekennzeichnet,**
**dass** die trapezförmigen und ebenen Wände eine von den Seitenwänden zu einem mittleren Streifen hin zunehmende Dicke aufweisen.

7. Verfahren zur Herstellung einer Düsenklappe mit den Verfahrensschritten der Schaffung einer Struktur mit kontinuierlichen Rändern aus miteinander verflochtenen hitzebeständigen Fasern, des Aufspannens der Struktur um starre und poröse Profilelemente herum, die einander gegenüber liegen und gekrümmt sind, mit konvexen Bereichen, die in divergierende Richtungen weisen und Krümmungsradien von mindestens gleich 2xE an einer Innenfläche aufweisen, wobei E die Dicke der Struktur ist, sowie des Auftragens einer hitzebeständigen Matrix durch Ablagern in der Dampfphase auf die Struktur und durch die Profilelemente hindurch.

8. Verfahren zur Herstellung einer Düsenklappe mit den Verfahrensschritten der Schaffung einer Vielzahl von Strukturen (53, 54, 62, 63, 64) mit kontinuierlichen Rändern aus miteinander verflochtenen hitzebeständigen Fasern, des Aufspannens der Strukturen um starre und poröse Profilelementpaare (55, 56, 70, 71) herum, die einander gegenüber liegen und gekrümmt sind, mit konvexen Bereichen, die bei jedem der Paare in divergierende Richtungen weisen, wobei die Profilelemente Krümmungsradien von mindestens gleich 2xE aufweisen, wobei E die Dicke einer der Strukturen ist, die auf die Profilelemente aufgespannt ist, sowie des Auftragens einer hitzebeständigen Matrix durch Ablagern in der Dampfphase auf die Struktur und durch die Profilelemente hindurch, wobei die Strukturen übereinander angeordnete Abschnitte aufweisen und die durch diese übereinander angeordneten Abschnitte hindurch kontinuierlich ist.

9. Herstellungsverfahren nach Anspruch 8,
**dadurch gekennzeichnet,**
**dass** die Profilelementpaare symmetrisch bezogen auf eine gemeinsame Ebene angeordnet sind, und die übereinander angeordneten Abschnitte von Strukturen eben sind und sich zwischen den Profilelementpaaren befinden.

10. Herstellungsverfahren nach einem der Ansprüche 8 oder 9,
**dadurch gekennzeichnet,**
**dass** es einen Verfahrensschritt des Verbindens von Strukturen miteinander an den übereinander angeordneten Abschnitten vor dem Ablagern in der Dampfphase umfasst.

11. Herstellungsverfahren nach einem der Ansprüche 7 bis 10,
**dadurch gekennzeichnet,**
**dass** die Struktur oder die Strukturen durch Biegen einer Platte von miteinander verflochtenen Fasern, Anschließen zweier einander gegenüber liegender Ränder der Platte und Verbinden dieser beiden Ränder durch ein Verbindungsstück (60) kontinuierlich gemacht werden.
